# EUROPEAN PATENT APPLICATION

(11) **EP 4 840 322 A1**
(43) Date of publication of application: **18.11.2026**
(21) Application number: 25826188.2
(22) Date of filing: 26.06.2025
(51) Int. Cl.: A23L 29/262, A23L 29/256, A23L 29/00, A23L 33/21

(54) **ENHANCED HYDROGEL COMPOSITION, AND PREPARATION METHOD THEREFOR AND USE THEREOF**

(30) Priority: 26.06.2024 CN 202410837344
(71) Applicant: Sichuan Tangji Medical Technology Co., Ltd., Mianyang, Sichuan 621123 (CN)
(72) Inventor: LI, Wenyu, Qingdao, Shandong 266100 (CN); SHU, Yan, Qingdao, Shandong 266100 (CN)
(74) Representative: Comoglio, Elena
(86) International application number: PCT/CN2025/104040
(87) International publication number: WO 2026/002161

(57) **Abstract**

An enhanced hydrogel composition, and a preparation method therefor and the use thereof. According to the composition, a hydrogel is formed by means of a physical cross-linking mechanism using the chelation between calcium ions and an alginic acid raw material, with the assistance of a carboxymethyl cellulose raw material to reduce the sensitivity of the chelation. The hydrogel retains a high water absorption rate of media; meanwhile, the elastic modulus of the hydrogel is significantly enhanced by means of the introduction of silicon dioxide. The method for preparing the composition comprises: dispersing the carboxymethyl cellulose raw material, the alginic acid raw material, and the silicon dioxide in a solution, mixing same uniformly, drying the mixture to obtain a material A, and then mixing the material A with a calcium source to obtain the composition. Further provided is the use of the composition in the preparation of a space-occupying product in the digestive tract.

## Description

### CROSS-REFERENCE TO THE RELATED APPLICATIONS

The present invention claims the priority to the Chinese Patent Application with the filling No. 2024108373441, entitled "ENHANCED HYDROGEL COMPOSITION, AND PREPARATION METHOD THEREFOR AND USE THEREOF", filed on June 26, 2024 with the China National Intellectual Property Administration, the entity of which is incorporated herein by reference.

### TECHNICAL FIELD

The present invention relates to the field of food technology, and particularly to an enhanced hydrogel composition, a preparation method therefor and the use thereof.

### BACKGROUND

With the development of society and the improvement of living standards, obesity and diabetes have become increasingly serious health issues worldwide. At present, therapeutic methods for weight loss and diabetes primarily include pharmacotherapy, alimentary control, and surgical intervention. Among these, surgical intervention is an effective treatment, but brings significant surgical risks along and requires relatively long recovery time; the weight losing process through pharmacotherapy is often associated with weight regain upon drug discontinuation, or the drugs *per se* have issues concerning side effects; and alimentary control is a safe, effective and non-surgical method for weight loss, but it demands strong self-discipline from dieters, making it often difficult to effectively lose weight for a long term. In order to aid dieters in dietary control, they are often advised to consume products that induce a strong feeling of satiety. Therefore, developing a safe and effective product to aid in weight loss is of great significance.

In the prior art, various gastrointestinal occupancy gels are proposed to increase satiety and accordingly achieve the goal of weight loss. However, current gastrointestinal occupancy gels generally can only provide a good occupancy effect in the stomach, and when the occupancy gels reach the intestinal tract, the intestinal fluid pH and the intestinal pressure in the intestine destruct the structure of the occupancy gels, leading to highly variable satiety durations among individuals. Therefore, it is difficult to achieve goals of continuous weight loss and blood glucose control.

In view of this, the present invention is proposed.

### SUMMARY

An objective of the present invention is to provide an enhanced hydrogel composition, a preparation method therefor and the use thereof.

The present invention is implemented as follows:
In a first aspect, the present invention provides an enhanced hydrogel composition, raw materials thereof comprising a carboxymethylcellulose-based material, an alginate-based material, a calcium source, and silicon dioxide, wherein mass relationships among the respective constituents in the raw materials satisfy following requirements:
${W}_{1} = {m}_{2} / \left({m}_{1}+{m}_{2}\right) \times 100 % , and 10 % \leq {W}_{1} \leq 70 % ;$
${W}_{2} = {m}_{5} / \left({m}_{1}+{m}_{2}+{m}_{5}\right) \times 100 % , and 5 % \leq {W}_{2} \leq 40 % ;$
$f = {m}_{4} / {m}_{3} , and 0.09 \leq f \leq 3.00 ;$
where m₁ denotes the mass of the carboxymethylcellulose-based material, m₂ denotes the mass of the alginate-based material, m₃ denotes the mass of carboxyl groups in the alginate-based material, m₄ denotes the mass of Ca²⁺ in the calcium source, and m₅ denotes the mass of the silicon dioxide.

In a second aspect, the present invention provides a preparation method for a composition according to any of the preceding embodiments, comprising: dispersing a carboxymethylcellulose-based material, an alginate-based material, and silicon dioxide in a solution, mixing the solution uniformly and drying the solution to obtain Component A, and then mixing the Component A with a calcium source to obtain the composition.

In a third aspect, the present invention provides the use of a composition according to any of the preceding embodiments in the preparation of a gastrointestinal occupancy product.

The present invention has following beneficial effects:
The present invention provides an enhanced hydrogel composition, a preparation method therefor and the use thereof. This composition can rapidly form a hydrogel in water. The alginate-based material physically crosslinks with calcium ions, while the carboxymethylcellulose-based material can reduce the sensitivity of the alginate-based material to calcium ions. This allows the resulting hydrogel to maintain certain elastic modulus of the hydrogel, while the medium absorption rate is greatly improved. Moreover, silicon dioxide is further introduced to reinforce the strength of the hydrogel. The hydrogel formation process of the composition according to the present invention involves solely physical crosslinking, without any chemical reactions. The hydrogel prepared from the composition possesses high strength, a high elastic modulus and excellent water absorption performance. Upon entering the digestive tract, it can realize gastric occupancy in the stomach, thereby reducing food intake and accordingly achieving the goals of weight loss and blood glucose control. After the hydrogel reaches the small intestine, the hydrogel re-swells in the high-pH environment in the small intestine; at the same time, high-pH hydroxyl groups react with silicon dioxide, locally forming microgels that enhance the elastic modulus at high pH. This allows the hydrogel to occupy the volume in the small intestine and/or exert pressure on the small intestine wall for continuously inducing satiety, which is more conducive to weight and blood glucose management.

### BRIEF DESCRIPTION OF THE DRAWINGS

In order to more clearly illustrate the technical solutions in the embodiments of the present invention, accompanying drawings required to be used in the embodiments will be briefly introduced below. It should be understood that the following drawings merely show certain embodiments of the present invention, and thus should not be construed as limiting the scope thereof. For a person ordinarily skilled in the art, further relevant drawings could be obtained according to these drawings without using any creative efforts.

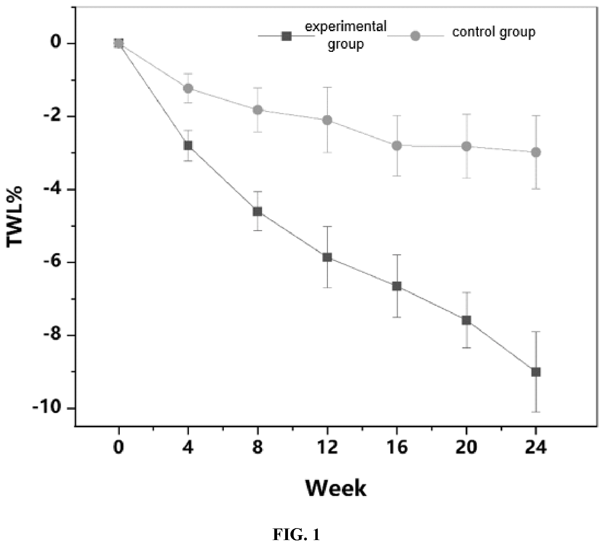

FIG. 1 is a broken line graph showing weight loss effects provided in Test Example 2 of the present invention.

### DETAILED DESCRIPTION OF THE EMBODIMENTS

In the following contents, the embodiments of the present invention will be described in detail with reference to specific examples; however, a person skilled in the art would understand that following examples are merely used to illustrate the present invention and should not be construed as limiting the scope of the present invention. Examples, for which no concrete conditions are specified, are carried out under conventional conditions or conditions recommended by manufactures. Reagents or instruments that are used, for which no manufacturers are specified, are conventional products available commercially.

Endpoints of any ranges disclosed in the present invention and any values therein are not limited to the exact ranges or values, and these ranges or values should be construed as including values approximating these ranges or values. For numerical ranges, one or more new numerical ranges can be obtained through combinations of the endpoint values of respective ranges, the endpoint values of respective ranges and individual point values, and individual point values, and these numerical ranges should be considered as specifically disclosed herein.

In the prior art, a hydrogel with certain strength and water absorption performance is obtained by chemically crosslinking citric acid with low-molecular-weight sodium carboxymethylcellulose, and this hydrogel can increase satiety in the stomach, thereby achieving the goal of weight loss. However, the preparation process of the hydrogel involves chemical crosslinking, and ester bonds are formed through a chemical reaction by utilizing hydroxyl groups in sodium carboxymethylcellulose, thereby connecting molecules, so as to obtain a hydrogel product. This preparation technology is complex, has a low yield coefficient and incurs high costs.

Based on the existing gastric occupancy hydrogel prepared through the chemical crosslinking method, the inventors have found through research that the hydrogel has a critical issue in practical application, that is, the medium absorption rate and the elastic modulus of the hydrogel are often contradictory. Generally, if the medium absorption rate of the hydrogel increases, the hydrogel becomes softer, correspondingly, the hydrogel has a lower elastic modulus and poorer mechanical properties, rendering that the satiety is prone to disappear under gastrointestinal peristalsis and pressure. Conversely, when the medium absorption rate of the hydrogel decreases, the hydrogel becomes stiffer, correspondingly, the hydrogel has a higher elastic modulus and better mechanical properties; however, the reduced water absorption rate leads to a smaller hydrogel volume and also reduces the satiety induced by the hydrogel.

In addition, existing hydrogel usually can only provide good occupancy effect in the stomach. After the hydrogel reaches the intestinal tract, the high pH of intestinal fluid in the intestinal tract would make the gel further expanded and lose a significant portion of gel strength. Consequently, the hydrogel cannot exert pressure on the intestinal tract, ultimately shortening the duration of satiety.

Therefore, the present invention not only needs to develop a method with simple processes, but also needs to simultaneously improve the medium absorption rate and the elastic modulus of the hydrogel and improve the tolerance of the hydrogel to varying pH levels and pressures. On this basis, the inventors provide following solution.

In a first aspect, the present invention provides an enhanced hydrogel composition, raw materials thereof comprising a carboxymethylcellulose-based material, an alginate-based material, a calcium source, and silicon dioxide, wherein mass relationships among the respective constituents in the raw materials satisfy following requirements:
${W}_{1} = {m}_{2} / \left({m}_{1}+{m}_{2}\right) \times 100 % , and 10 % \leq {W}_{1} \leq 70 % ;$
${W}_{2} = {m}_{5} / \left({m}_{1}+{m}_{2}+{m}_{5}\right) \times 100 % , and 5 % \leq {W}_{2} \leq 40 % ;$
$f = {m}_{4} / {m}_{3} , and 0.09 \leq f \leq 3.00 ,$
where m₁ denotes the mass of the carboxymethylcellulose-based material, m₂ denotes the mass of the alginate-based material, m₃ denotes the mass of carboxyl groups in the alginate-based material, m₄ denotes the mass of Ca²⁺ in the calcium source, and m₅ denotes the mass of the silicon dioxide, wherein the units of m₁, m₂, m₃, m₄, and m₅ are the same, for example, g or kg.

By dispersing the composition according to the present invention in water, the composition can be gelatinized so as to form a hydrogel. Specifically, the alginate-based material in the composition can chelate with calcium ions in a solution state to form the hydrogel, wherein physical crosslinking is involved. However, since the alginate-based material is highly sensitive to calcium ions, directly mixing the alginate-based material with the calcium source leads to rapid chelation of the alginate-based material with calcium ions in the solution state, and the resulting hydrogel has high strength but poor water absorption capacity, which cannot meet the requirements for serving as gastrointestinal occupancy gel.

Therefore, the applicants propose adding a carboxymethylcellulose-based material to the system composed of the alginate-based material and the calcium source, wherein the carboxymethylcellulose-based material can reduce the sensitivity of the alginate-based material to calcium ions, thereby realizing controllable regulation of the water absorption capacity and the elastic modulus of the composition during the gelation process. By controlling the values of W₁ and f, the hydrogel formed from the composition provided in the present invention can not only have good water absorption capacity, but also have a higher elastic modulus. Silicon dioxide is further added to the composition system, such that the hydrogel formed from the composition according to the present invention further has higher strength.

Furthermore, the preparation process of the composition according to the present invention involves no chemical reaction, but only involves physical crosslinking, and main molecular chains are formed through the chelation between the alginate-based material and the calcium source. As for processes involving chemical crosslinking, parameters of the hydrogel, such as the water absorption capacity and the elastic modulus, can only be controlled by strictly controlling molecular weights crosslinked; in contrast, the composition provided in the present invention is prepared more conveniently, has higher yield, and incurs lower development costs.

When dispersed in water, the composition according to the present invention rapidly swells due to water absorption, thereby forming a gelatinous hydrogel, and the hydrogel passes through the esophagus into the stomach after being swallowed. Owing to its high strength, high elastic modulus and excellent water absorption performance, the hydrogel prepared from the composition according to the present invention realizes gastric occupancy in the stomach, thereby reducing food intake and accordingly achieving the goals of weight loss and blood glucose control. After the hydrogel reaches the small intestine, the hydrogel re-swells in the high-pH environment in the small intestine; at the same time, high-pH hydroxyl groups react with silicon dioxide, locally forming microgels that enhance the elastic modulus at high pH. This allows the hydrogel to occupy the volume in the small intestine and/or exert pressure on the small intestine wall for continuously inducing satiety, which is more conducive to weight management.

In order to further optimize the strength, the water absorption, and the elastic modulus of the hydrogel formed after the gelation of the composition provided in the present invention, the parameter ranges for W₁, W₂, and f can be further controlled.

Specifically, W₁ satisfies the requirement 10% ≤ W₁ ≤ 70%, W₂ satisfies the requirement 10% ≤ W₂ ≤ 30%, and f satisfies the requirement 0.2 ≤ f ≤ 3.00;

More preferably, W₁ satisfies the requirement 12% ≤ W₁ ≤ 22%, W₂ satisfies the requirement 10% ≤ W₂ ≤ 25%, and f satisfies the requirement 0.2 ≤ f ≤ 2.00.

For example, W₁ can be 10%, 20%, 30%, 40%, 50%, 60%, or 70%, or any range value between any two of the above values. W₂ can be 10%, 15%, 20%, 25%, or 30%, or any range value between any two of the above values. f can be 0.2, 0.50, 1.00, 1.50, or 2.00, or any range value between any two of the above values.

In an optional embodiment, the composition forms a hydrogel upon water absorption, and the composition has a medium absorption rate ≥ 40 times, that is to say, the enhanced hydrogel composition provided in the present invention can absorb an aqueous medium more than 40 times its dry basis weight; in simulated gastric fluid, the hydrogel has an elastic modulus ≥ 600 Pa; and in simulated intestinal fluid, the hydrogel has an elastic modulus ≥ 400 Pa.

The simulated gastric fluid, i.e., artificial gastric juice, is artificially prepared fluid having properties similar to those of gastric juice. The simulated gastric fluid in the present invention is artificial gastric juice prepared according to the fourth volume of the Pharmacopoeia of the People's Republic of China 2020 Editi*on*, is then diluted by 8 times so as to simulate the state of human gastric juice half an hour before meals.

Similarly, the simulated intestinal fluid, i.e., artificial intestinal juice, is artificially prepared fluid having properties similar to those of intestinal juice. The simulated intestinal fluid in the present invention is artificial intestinal juice prepared according to the fourth volume of the Pharmacopoeia of the People's Republic of China 2020 Editi*on*.

By controlling the selection and the proportions of the respective constituents of the composition in the present invention, the composition provided in the present invention is enabled, after forming a hydrogel, to have good medium absorption rate (the water absorption capacity thereof can reach more than 40 times the dry basis weight of the composition) and exhibit a relatively high elastic modulus both in the simulated gastric fluid and the simulated intestinal fluid. This enables the hydrogel to occupy volume in the digestive tract and induce a satiety effect, thereby aiding in achieving a weight loss effect.

Furthermore, the selection of raw material sources is another factor in improving the performance of the hydrogel formed from the composition. Taking sodium alginate as an example, some literature reports that sodium alginate can form gel at gastric pH and can accordingly prolong the gastric emptying time, thereby reducing the food intake dose and preventing obesity. However, limited by different sources, molecular weights and molecular structures (proportion between mannuronic acid and guluronic acid) of alginates, the weight loss effects vary greatly in different literature reports, which significantly limits the application of alginates in the field of weight loss.

To further improve the performance of the hydrogel, in an optional embodiment, the alginate-based material, at a concentration of 2% in solution, has a viscosity ≥ 4000 mPa·S; preferably, the alginate-based material, at a concentration of 2% in solution, has a viscosity ≥ 5000 mPa·S; and even more preferably, the alginate-based material, at a concentration of 2% in solution, has a viscosity ranging from 5500 to 20000 mPa·S.

The carboxymethylcellulose-based material, at a concentration of 2% in solution, has a viscosity ≥ 4000 mPa·S; preferably, the carboxymethylcellulose-based material, at a concentration of 2% in solution, has a viscosity ≥ 5000 mPa·S; and even more preferably, the carboxymethylcellulose-based material, at a concentration of 2% in solution, has a viscosity ranging from 6000 to 20000 mPa·S.

Since the carboxymethylcellulose-based material and the alginate-based material exhibit different properties depending on their different molecular weights and molecular structures, the molecular weights and the molecular structures of the carboxymethylcellulose-based material as well as the alginate-based material are accordingly controlled in the present invention by controlling the viscosity ranges of the carboxymethylcellulose-based material as well as the alginate-based material, and the water absorption and the elastic modulus of the hydrogel formed from the composition are accordingly improved.

Preferably, the carboxymethylcellulose-based material includes, but is not limited to, carboxymethylcellulose and its salts, and the salts of carboxymethylcellulose include any one selected from sodium carboxymethylcellulose, potassium carboxymethylcellulose, and ammonium carboxymethylcellulose. Any raw material possessing the carboxymethylcellulose structure can be used as raw material for reducing the sensitivity of the alginate-based material to the calcium source.

Preferably, the alginate-based material includes, but is not limited to, alginic acid and its salts, and the salts of alginic acid include any one selected from sodium alginate, potassium alginate, and ammonium alginate. Any raw material possessing the structure of alginic acid and carboxyl groups thereof can be used as raw material for chelating with the calcium source and subsequent undergoing physical crosslinking.

Preferably, the calcium source includes, but is not limited to, at least one selected from calcium carbonate, calcium chloride, calcium citrate, calcium lactate, calcium gluconate, calcium acetate, or calcium phosphate; and any product capable of providing a source of calcium can be used as the calcium source in the present invention. More preferably, the calcium source is a low-solubility calcium source; and even more preferably, the low-solubility calcium source is one selected from calcium lactate, calcium carbonate, and calcium phosphate.

It should be clarified that the composition provided in the present invention can realize gastrointestinal occupancy, only after forming a hydrogel and entering the digestive tract, and accordingly provide satiety and realize a weight loss effect; therefore, it could be understood that the respective constituents in the raw materials of the composition according to the present invention are all food-grade ingredients, so as to ensure that the hydrogel formed from the composition is edible.

The applicants further found through research that during the process of forming a hydrogel from the composition, it is possible to directly add the hydrogel composition to water, and it is also possible to separately add different constituents of the hydrogel composition to water.

In an optional embodiment, when different constituents of the hydrogel composition are separately added to water, the present invention also allows to separately package the raw materials of the composition for better instruction on the sequence for mixing the composition.

In an optional embodiment, the raw materials of the hydrogel composition comprise separately packaged Component A and Component B, wherein the Component A is a mixture of the carboxymethylcellulose-based material, the alginate-based material, and silicon dioxide, and the Component B is the calcium source. The Component A is configured to be mixed with a solution first, and the Component B is configured to be dispersed in the solution after the dispersion of the Component A, so as to prevent the calcium source from first rapidly reacting with the alginate-based material, which can result in reduced water absorption performance of the hydrogel.

Preferably, to ensure rapid dispersion of the Component A in the solution to form a gelatinous suspension, the Component A has a particle size ranging from 0.1 mm to 2 mm, more preferably ranging from 0.3 mm to 2 mm, and even more preferably ranging from 0.3 mm to 1 mm.

In a second aspect, the present invention provides a preparation method for a hydrogel composition according to any of the preceding embodiments, comprising: dispersing a carboxymethylcellulose-based material, an alginate-based material, and silicon dioxide in a solution, mixing the solution uniformly and drying the solution to obtain Component A, and then mixing the Component A with a calcium source to obtain the composition.

Preferably, during the preparation process of the Component A, a polymer concentration in the solution ranges from 1% to 10%, and the drying temperature ranges from 70°C to 140°C; and preferably, the drying temperature ranges from 70°C to 90°C.

The polymer in the solution refers to a total concentration of the carboxymethylcellulose-based material and the alginate-based material.

The hydrogel composition provided in the present invention is solid before gelation, when added to water, it can be rapidly gelatinized to obtain a hydrogel. After consumption, the hydrogel can realize gastrointestinal occupancy, provide satiety, and reduce the frequency of food intake and the food intake dose, thereby realizing weight loss and collaboratively improving diabetic symptoms.

In a third aspect, the present invention provides the use of a composition according to any of the preceding embodiments in the preparation of a gastrointestinal occupancy product.

In an optional embodiment, the application method of the hydrogel composition provided in the present invention comprises adding the solid composition as a whole to water with stirring; it is also possible to first add a mixture of the carboxymethylcellulose-based material, the alginate-based material, and silicon dioxide to water with stirring to obtain a pre-gel suspension, and then add the calcium source to the pre-gel suspension with stirring to obtain the composition.

That is to say, when the composition is packaged as Component A and Component B, the Component A is first added to water with stirring to obtain a pre-gel suspension, and the Component B is then added to water with stirring to obtain a hydrogel.

In an optional embodiment, in order to ensure uniform mixing of the respective components of the raw materials, the solution is stirred twice and each stirring lasts for 2-5 min; and in order to obtain a hydrogel with intact morphology, it should be ensured during stirring that no whirlpool is formed in fluid.

### Example 1

The present example provided an enhanced hydrogel composition composed of Component A and Component B, wherein the Component A was composed of sodium carboxymethylcellulose, sodium alginate, and silicon dioxide, and the Component B was calcium lactate.

The mass of sodium carboxymethylcellulose was 20.0 g, and its viscosity at a concentration of 2% in solution was 8000 mPa·S.

The mass of sodium alginate was 4.0 g, and its viscosity at a concentration of 2% in solution was 5800 mPa·S.

The mass of silicon dioxide was 2.5 g.

The present example further provided a preparation method for the above composition, comprising following steps:
4.0 g of sodium alginate were added to 500 mL of water and dispersed therein with stirring; 2.5 g of silicon dioxide were then added to the water and dispersed therein with stirring; 20.0 g of sodium carboxymethylcellulose were added; and sodium alginate, sodium carboxymethylcellulose, silicon dioxide, and water were mixed under mechanical stirring at 1000 rpm to form a uniform suspension. The suspension was transferred to a metal tray, the thickness of the suspension in the metal tray was controlled to be below 1 cm, and the metal tray was then dried at 70°C for 24 h to obtain solid Component A. The solid Component A was pulverized in a pulverizer, and screened respectively by means of a 10-mesh sieve and a 120-mesh sieve to obtain granular Component A having a particle size of 0.1-2 mm, which was encapsulated for later use.

Calcium lactate was encapsulated as Component B, wherein the mass of calcium lactate in the Component B and the mass of sodium alginate in the Component A satisfied the requirement f = 0.61.

### Example 2

The present example provided an enhanced hydrogel composition composed of Component A and Component B, wherein the Component A was composed of sodium carboxymethylcellulose, sodium alginate, and silicon dioxide, and the Component B was calcium lactate.

The mass of sodium carboxymethylcellulose was 20.0 g, and its viscosity at a concentration of 2% in solution was 8000 mPa·S.

The mass of sodium alginate was 5.0 g, and its viscosity at a concentration of 2% in solution was 5800 mPa·S.

The mass of silicon dioxide was 4.0 g.

The present example further provided a preparation method for the above composition, comprising following steps:
5.0 g of sodium alginate were added to 500 mL of water and dispersed therein with stirring; 4.0 g of silicon dioxide were then added to the water and dispersed therein with stirring; 20.0 g of sodium carboxymethylcellulose were added; and sodium alginate, sodium carboxymethylcellulose, silicon dioxide, and water were mixed under mechanical stirring at 1000 rpm to form a uniform suspension. The suspension was transferred to a metal tray, the thickness of the suspension in the metal tray was controlled to be below 1 cm, and the metal tray was then dried at 70°C for 24 h to obtain solid Component A. The solid Component A was pulverized in a pulverizer, and screened respectively by means of a 10-mesh sieve and a 120-mesh sieve to obtain granular Component A having a particle size of 0.1-2 mm, which was encapsulated for later use.

Calcium lactate was encapsulated as Component B, wherein the mass of calcium lactate in the Component B and the mass of sodium alginate in the Component A satisfied the requirement f = 0.42.

### Example 3

The present example provided an enhanced hydrogel composition composed of Component A and Component B, wherein the Component A was composed of sodium carboxymethylcellulose, sodium alginate, and silicon dioxide, and the Component B was calcium lactate.

The mass of sodium carboxymethylcellulose was 20.0 g, and its viscosity at a concentration of 2% in solution was 8000 mPa·S.

The mass of sodium alginate was 5.0 g, and its viscosity at a concentration of 2% in solution was 5800 mPa·S.

The mass of silicon dioxide was 2.8 g.

The present example further provided a preparation method for the above composition, comprising following steps:
5.0 g of sodium alginate were added to 500 mL of water and dispersed therein with stirring; 2.8 g of silicon dioxide were then added to the water and dispersed therein with stirring; 20.0 g of sodium carboxymethylcellulose were added; and sodium alginate, sodium carboxymethylcellulose, silicon dioxide, and water were mixed under mechanical stirring at 1000 rpm to form a uniform suspension. The suspension was transferred to a metal tray, the thickness of the suspension in the metal tray was controlled to be below 1 cm, and the metal tray was then dried at 70°C for 24 h to obtain solid Component A. The solid Component A was pulverized in a pulverizer, and screened respectively by means of a 10-mesh sieve and a 120-mesh sieve to obtain granular Component A having a particle size of 0.1-1 mm, which was encapsulated for later use.

Calcium lactate was encapsulated as Component B, wherein the mass of calcium lactate in the Component B and the mass of sodium alginate in the Component A satisfied the requirement f = 0.76.

### Example 4

The present example provided an enhanced hydrogel composition composed of Component A and Component B, wherein the Component A was composed of sodium carboxymethylcellulose, sodium alginate, and silicon dioxide, and the Component B was calcium lactate.

The mass of sodium carboxymethylcellulose was 20.0 g, and its viscosity at a concentration of 2% in solution was 8000 mPa·S.

The mass of sodium alginate was 5.0 g, and its viscosity at a concentration of 2% in solution was 5800 mPa·S.

The mass of silicon dioxide was 2.8 g.

The present example further provided a preparation method for the above composition, comprising following steps:
5.0 g of sodium alginate were added to 500 mL of water and dispersed therein with stirring; 2.8 g of silicon dioxide were then added to the water and dispersed therein with stirring; 20.0 g of sodium carboxymethylcellulose were added; and sodium alginate, sodium carboxymethylcellulose, silicon dioxide, and water were mixed under mechanical stirring at 1000 rpm to form a uniform suspension. The suspension was transferred to a metal tray, the thickness of the suspension in the metal tray was controlled to be below 1 cm, and the metal tray was then dried at 70°C for 24 h to obtain solid Component A. The solid Component A was pulverized in a pulverizer, and screened respectively by means of a 10-mesh sieve and a 120-mesh sieve to obtain granular Component A having a particle size of 0.1-2 mm, which was encapsulated for later use.

Calcium lactate was encapsulated as Component B, wherein the mass of calcium lactate in the Component B and the mass of sodium alginate in the Component A satisfied the requirement f = 1.68.

### Example 5

The present example provided an enhanced hydrogel composition, and it was essentially the same as Example 4, except that at a concentration of 2% in solution, sodium carboxymethylcellulose had a viscosity of 13000 mPa·S.

### Example 6

The present example provided an enhanced hydrogel composition composed of Component A and Component B, wherein the Component A was composed of sodium carboxymethylcellulose, sodium alginate, and silicon dioxide, and the Component B was calcium lactate. The preparation method for the Component A was the same as that in Example 3, and the value of f was 0.76. The difference merely lay in that the Component A and the Component B were directly mixed according to the f value and then encapsulated for later use.

### Comparative Example 1

The present comparative example provided a hydrogel composition, the raw material components thereof and the preparation method therefor were similar to that in Example 3, and the difference merely lay in that no silicon dioxide was added to Component A.

### Comparative Example 2

The present comparative example provided a hydrogel composition, the raw material components thereof and the preparation method therefor were similar to that in Example 3, and the difference merely lay in that no silicon dioxide was added to Component A, and f = 1.51.

### Comparative Example 3

The present comparative example provided a hydrogel composition, the raw material components thereof and the preparation method therefor were similar to that in Example 3, and the difference merely lay in that the content of silicon dioxide in Component A was 0.3 g.

### Comparative Example 4

The present comparative example provided a hydrogel composition, and it was similar to Example 3, while the difference merely lay in that Component A contained only 27.8 g of sodium alginate, and f = 1.68.

### Comparative Example 5

The present comparative example provided a hydrogel composition, and it was similar to Example 3, while the difference merely lay in that sodium carboxymethylcellulose in Component A was substituted with pectin, and no silicon dioxide was contained.

### Comparative Example 6

The present comparative example provided a hydrogel composition, and it was similar to Example 3, while the difference merely lay in that sodium carboxymethylcellulose in Component A had a viscosity of 1000 mPa·S in an aqueous solution with a concentration of 2%.

### Test Example 1

### 1) Detection in simulated gastric fluid:

Artificial gastric juice was prepared according to the fourth volume of the Pharmacopoeia of the People's Republic of China 2020 Editi*on*, then diluted by 8 times to adjust the pH to 2.1 for serving as simulated artificial gastric juice representing the state half an hour before meals (hereinafter referred to as "simulated gastric fluid").

60 mL of the simulated gastric fluid were measured out and stirred with a magnetic stirrer at a stirring speed of 100 rpm; 0.6 g of Component A from Examples 1-6 and Comparative Examples 1-6 were respectively weighed and slowly added to the above simulated gastric fluid; after stirring for 5 min, Component B was slowly added to the above simulated gastric fluid respectively according to the f values of Examples 1-6 and Comparative Examples 1-6, and continuously stirred for 5 min to simulate the treatment process of gastric fluid.

A piece of 150-mesh gauze was taken and weighed, and its weight was recorded as g₁; the above stirred mixture was then filtered using the 150-mesh gauze to remove unabsorbed simulated gastric fluid (during filtration, it should be noted that the fluid on the surface of the gauze was gently scraped with fingers, and the process was ended, till it was visible to human eyes that there was no fluid on the fingers); the mixture and the gauze were then weighed together, and the weight was recorded as g₂; and the state of the hydrogel obtained after filtration was observed.

The medium absorption rate of the composition in the simulated gastric fluid was calculated according to the formula MUR₁ = (g₂ - g₁)/0.6. The elastic modulus G₁' of the filtered hydrogel was determined using a rheometer (values corresponding to an angular frequency of 10 rad/s were uniformly sampled). The results are shown in Table 1.

### 2) Detection in simulated intestinal fluid:

Artificial intestinal juice was prepared according to the fourth volume of the Pharmacopoeia of the People's Republic of China 2020 Editi*on* for serving as simulated small intestinal fluid (hereinafter referred to as "simulated intestinal fluid").

The hydrogel obtained after the completion of the detection in "1) detection in simulated gastric fluid" was weighed, and its weight was recorded as g₀; the hydrogel was then added to a beaker containing 200 mL of the simulated intestinal fluid; the beaker was transferred to a shaker and treated at 37°C for 120 min at a speed of 60 rpm to simulate the treatment process of intestinal fluid.

A piece of 150-mesh gauze was weighed and its weight was recorded as g₃; the above treated mixture was then filtered using the 150-mesh gauze to remove unabsorbed simulated intestinal fluid (during filtration, it should be noted that the fluid on the surface of the gauze was gently scraped with fingers, and the process was ended, till it was visible to human eyes that there was no fluid on the fingers); the mixture and the gauze were then weighed together, and the weight was recorded as g₄; and the state of the hydrogel obtained after filtration was observed.

The medium absorption rate of the hydrogel in the simulated intestinal fluid was calculated according to the formula MUR₂ = (g₄ - g₃)/(g₀ * MUR₁). The elastic modulus G₂' of the filtered hydrogel was determined using a rheometer (values corresponding to an angular frequency of 10 rad/s were uniformly sampled). The results are shown in Table 1.

**Table 1 Properties of the composition and the hydrogel**

| | W₁ (%) | W₂ (%) | f | MUR₁ (g/g) | MUR₂ (g/g) | G₁' (Pa) | G₂' (Pa) |
|---|---|---|---|---|---|---|---|
| Example 1 | 16.7 | 9.4 | 0.61 | 78.63 | 80.60 | 723.9 | 642.6 |
| Example 2 | 20.0 | 13.8 | 0.42 | 64.23 | 73.80 | 994.3 | 700.5 |
| Example 3 | 20.0 | 10.1 | 0.76 | 65.80 | 74.41 | 1237.5 | 870.6 |
| Example 4 | 20.0 | 10.1 | 1.68 | 54.73 | 63.25 | 1296.0 | 910.8 |
| Example 5 | 20.0 | 10 | 1.68 | 53.86 | 66.38 | 1385.3 | 990.2 |
| Example 6 | 20.0 | 10 | 0.76 | 60.86 | 72.41 | 1300.2 | 900.9 |
| Comparative Example 1 | 20.0 | 0 | 0.76 | 69.45 | 76.57 | 466.9 | 190.32 |
| Comparative Example 2 | 20.0 | 0 | 1.51 | 56.50 | 63.85 | 890.9 | 337.8 |
| Comparative Example 3 | 20.0 | 1.2 | 0.76 | 65.90 | 73.90 | 965.2 | 370.3 |
| Comparative Example 4 | 100 | 0 | 1.68 | 7.60 | 22.8 | 8800.1 | 4800.5 |
| Comparative Example 5 | 20 | 10.1 | 0.76 | 20.3 | 30.3 | 2860.3 | 2031.9 |
| Comparative Example 6 | 20 | 10.1 | 0.76 | 64.94 | 78.5 | 518.5 | 345.2 |

It can be determined from Table 1 that the compositions provided in the examples of the present invention have, after transformed into hydrogels, a medium absorption rate of up to 78.63 times their original weight, and still maintain a high elastic modulus (greater than 700 Pa) after water absorption in the simulated gastric fluid. Moreover, in Table 1, it can be determined from the experimental results of Examples 1-6 and Comparative Examples 1-6 that as for Comparative Examples 1-3 with no silicon dioxide or a small amount of silicon dioxide added, upon reaching the pH environment of the intestinal tract, the elastic modulus significantly decreased and was less than 400 Pa in all cases; as for Examples 1-6 containing silicon dioxide, the elastic modulus in the pH environment of the intestinal tract was greater than 600 Pa in all cases; as for Comparative Example 4 with no carboxymethylcellulose-based material added, poorer water absorption performance but an extremely high elastic modulus were observed, which was caused by high sensitivity of pure sodium alginate to calcium ions; and as for Comparative Examples 5 and 6 having carboxymethylcellulose-based material substituted, it is not difficult to find that no composition taking into account both the medium absorption and the elastic modulus can be obtained. In summary, in Examples 1-6 of the present invention, by adding the carboxymethylcellulose-based material to reduce the sensitivity of calcium ions crosslinking with sodium alginate, upon reaching the intestinal tract, high-pH hydroxyl groups react with silicon dioxide, locally forming microgels that enhance the elastic modulus at high pH. This allows the hydrogel to occupy the volume in the small intestine and/or exert pressure on the small intestine wall for continuously inducing satiety, which is more conducive to weight management.

### Test Example 2

20 volunteers were recruited and randomly divided into 2 groups, i.e., a control group and an experimental group. The control group consumed the same amount of sucrose, while the experimental group respectively consumed 3 g of the enhanced hydrogel composition from Example 4 with two meals per day, and the consumed products were prepared into a hydrogel according to the method in Example 6 for all 20 volunteers. The time of consumption was 30 min before meals, twice per day, i.e., lunch at noon and supper in the afternoon every day. Concurrently, the volunteers underwent nutritional intervention, with daily calorie intake being reduced by 300 kcal. The body weights of the volunteers were recorded every 4 weeks for a total of 24 weeks, the percentage of total weight loss (TWL) was calculated according to the formula TWL = (initial weight - weight at follow-up)/initial weight, and the results are shown in FIG. 1.

It can be determined from FIG. 1 that a good weight loss effect was achieved collaboratively through the nutritional intervention and the use of the composition provided in the present invention, wherein the weight loss ratio within 24 weeks ranged between 8% and 10%, indicating a significant weight loss effect, whereas the weight loss ratio of the control group was less than 3%. It indicates that the hydrogel composition provided in the examples of the present invention has a good weight loss effect.

The enhanced hydrogel composition, the preparation method therefor and the use thereof provided in the examples of the present invention have at least following advantages:
1) The composition provided in the present invention is prepared using food-grade raw materials via physical interactions and is directly edible as food.
2) In the present invention, the composition is prepared by utilizing physical crosslinking between the alginate-based material and the calcium source, and a hydrogel is formed; in contrast to a hydrogel prepared using a chemical crosslinking method, this preparation process is simpler, achieves higher yield, and is conducive to large-scale production.
3) A carboxymethylcellulose-based material is added to the chelation system of the alginate-based material and the calcium source, and the carboxymethylcellulose-based material can reduce the sensitivity of the alginate-based material to calcium ions, thereby realizing controllable regulation of the water absorption capacity and the elastic modulus of the composition during the gelation process. By controlling the values of W₁ and f, the hydrogel formed from the composition provided in the present invention can achieve both good water absorption capacity and a relatively high elastic modulus. Silicon dioxide is further added to the composition system, such that the hydrogel formed from the composition according to the present invention also possesses high strength.
4) When the composition according to the present invention is dispersed in water and rapidly swells due to water absorption, and accordingly forms a hydrogel, owing to the high elastic modulus and the excellent water absorption performance of the hydrogel prepared from the composition according to the present invention, it can realize gastric occupancy in the stomach, thereby reducing food intake and accordingly achieving the goals of weight loss and blood glucose control. After the hydrogel reaches the small intestine, the hydrogel re-swells in the high-pH environment in the small intestine; at the same time, high-pH hydroxyl groups react with silicon dioxide, locally forming microgels, wherein the elastic modulus of the hydrogel in the intestinal tract is maintained. This allows the hydrogel to occupy the volume in the small intestine and/or exert pressure on the small intestine wall for continuously inducing satiety, which is more conducive to weight management.

### INDUSTRIAL APPLICABILITY

The present invention provides an enhanced hydrogel composition, a preparation method therefor and a use thereof. The composition can exist in the gastrointestinal tract in the form of a hydrogel, and occupies intragastric volume and/or occupies the volume in the small intestine and/or exerts pressure on the small intestine wall for continuously inducing satiety, which is conducive to weight and blood glucose management.

## Claims

1. An enhanced hydrogel composition, **characterized in that** raw materials comprise a carboxymethylcellulose-based material, an alginate-based material, a calcium source, and silicon dioxide, wherein mass relationships among the respective constituents in the raw materials satisfy following requirements:${W}_{1} = {m}_{2} / \left({m}_{1}+{m}_{2}\right) \times 100 % , and 10 % \leq {W}_{1} \leq 70 % ;$ ${W}_{2} = {m}_{5} / \left({m}_{1}+{m}_{2}+{m}_{5}\right) \times 100 % , and 5 % \leq {W}_{2} \leq 40 % ;$and $f = {m}_{4} / {m}_{3} , and 0.09 \leq f \leq 3.00 ;$ where m₁ denotes a mass of the carboxymethylcellulose-based material, m₂ denotes a mass of the alginate-based material, m₃ denotes a mass of carboxyl groups in the alginate-based material, m₄ denotes a mass of Ca²⁺ in the calcium source, and m₅ denotes the mass of the silicon dioxide.

2. The composition according to claim 1, wherein W₁ satisfies the requirement 10% ≤ W₁ ≤ 70%, W₂ satisfies the requirement 10% ≤ W₂ ≤ 30%, and f satisfies the requirement 0.2 ≤ f ≤ 3.00;
more preferably, W₁ satisfies the requirement 12% ≤ W₁ ≤ 22%, W₂ satisfies the requirement 10% ≤ W₂ ≤ 25%, and f satisfies the requirement 0.2 ≤ f ≤ 2.00.

3. The composition according to claim 1 or 2, wherein the composition forms a hydrogel upon water absorption, and the composition has a medium absorption rate ≥ 40 times; in simulated gastric fluid, the hydrogel has an elastic modulus ≥ 600 Pa; and in simulated intestinal fluid, the hydrogel has an elastic modulus ≥ 400 Pa.

4. The composition according to claim 1, wherein the carboxymethylcellulose-based material, at a concentration of 2% in solution, has a viscosity ≥ 4000 mPa·S;
preferably, the carboxymethylcellulose-based material comprises carboxymethylcellulose and salts of the carboxymethylcellulose, and the salts of carboxymethylcellulose comprise any one selected from sodium carboxymethylcellulose, potassium carboxymethylcellulose, and ammonium carboxymethylcellulose.

5. The composition according to claim 1, wherein the alginate-based material, at a concentration of 2% in solution, has a viscosity ≥ 4000 mPa·S;
preferably, the alginate-based material comprises alginic acid and salts of alginic acid, and the salts of alginic acid comprise any one selected from sodium alginate, potassium alginate, and ammonium alginate.

6. The composition according to claim 1, wherein the calcium source comprises at least one selected from calcium carbonate, calcium chloride, calcium citrate, calcium lactate, calcium gluconate, calcium acetate, or calcium phosphate; more preferably, the calcium source is a low-solubility calcium source; and even more preferably, the low-solubility calcium source is one selected from calcium lactate, calcium carbonate, and calcium phosphate.

7. The composition according to claim 1, wherein the composition has a particle size ranging from 0.1 mm to 2 mm, more preferably ranging from 0.3 mm to 2 mm, and even more preferably ranging from 0.3 mm to 1 mm.

8. A preparation method for a composition according to any one of claims 1 to 7, **characterized by** comprising: dispersing a carboxymethylcellulose-based material, an alginate-based material, and silicon dioxide in a solution, mixing the solution uniformly and drying the solution to obtain Component A, and then mixing the Component A with a calcium source to obtain the composition.

9. The preparation method according to claim 8, wherein during the preparation process of the Component A, a polymer concentration in the solution ranges from 1% to 10%, and the drying temperature ranges from 70°C to 140°C; and preferably, the drying temperature ranges from 70°C to 90°C.

10. A use of a composition according to any one of claims 1 to 7 in the preparation of a gastrointestinal occupancy product.
